# EUROPÄISCHE PATENTSCHRIFT

(11) **EP 2 588 754 B1**
(45) Veröffentlichungstag und Bekanntmachung des Hinweises auf die Patenterteilung: **11.10.2017**
(21) Anmeldenummer: 11728018.0
(22) Anmeldetag: 29.06.2011
(51) Int. Cl.: F03D 80/30

(54) **MASCHINENHAUSVERKLEIDUNG FÜR GONDEL EINER WINDTURBINE**
WIND TURBINE NACELLE COVERING
ENVELOPPE POUR NACELLE D'ÉOLIENNE

(30) Priorität: 29.06.2010 DE 102010025546
(43) Veröffentlichungstag der Anmeldung: 08.05.2013
(73) Patentinhaber: AE Rotor Holding B.V., 7559 ST Hengelo (NL)
(72) Erfinder: THIEL, Enrico, 18057 Rostock (DE); KLOOK, Thorsten, 18055 Rostock (DE); HEUER, Stefan, 18055 Rostock (DE); ANAND, Deepak, 12047 Berlin (DE)
(74) Vertreter: Bradler, Carola Romana
(86) Internationale Anmeldenummer: PCT/EP2011/060963
(87) Internationale Veröffentlichungsnummer: WO 2012/001081

(56) Entgegenhaltungen:
- EP-A1- 1 830 063
- WO-A1-2005/050808
- WO-A1-2008/006377
- WO-A1-2010/037991
- DE-A1-102009 003 405
- FR-A1- 2 783 196

## Beschreibung

Die Erfindung betrifft eine Windturbine mit einer elektromagnetisch schirmenden Maschinenhausverkleidung, eine Maschinenhausverkleidung mit elektromagnetisch abschirmender Wirkung, ein Element für eine aus mehreren Elementen zusammengesetzte Maschinenhausverkleidung sowie ein Verfahren zur Herstellung eines solchen Elementes für eine Maschinenhausverkleidung einer Windturbine.

Um die feldgebundenen Störungen durch Funksysteme, Blitzentladungen und andere Störquellen auf die elektrischen und elektronischen Systeme in Maschinenhäusern zu reduzieren, ist eine elektromagnetische Schirmung notwendig. Einerseits dient diese dazu, dass die sensible Technik der beinhalteten Schaltsysteme nicht gestört wird und auf der anderen Seite, dient sie dazu, Personenschäden durch eventuell entstehende Kriechströme oder elektrische Entladungen zu vermeiden.

Ein bedeutender Anwendungsbereich für derartige Maßnahmen sind Maschinenhäuser von Windturbinen, siehe z.B. WO 2008/006377, da hier empfindliche technische Systeme zugänglich für Wartungspersonal auf engstem Raum untergebracht sind. Eine Schirmung ist auch zur Umsetzung einer Blitzschutzzone 1 innerhalb des Maschinenhauses nach dem, in den Normen der Internationale Elektrotechnische Kommission IEC 62305 beschriebenen und in der IEC 61400-24 für Windturbinen geforderten, Blitzschutzzonenkonzept notwendig.

Für eine elektromagnetische Schirmung im Maschinenhaus einer Windturbine sind aus dem Stand der Technik verschiedene Methoden bekannt: Eine Möglichkeit besteht darin, das Maschinenhaus vollkommen aus Metall zu fertigen. Dies ist jedoch bei Maschinenhäusern von großen Windturbinen wegen des hohen Gewichtes und der hohen Materialkosten unerwünscht.

Wenn das Maschinenhaus gemäß dem Stand der Technik aus Verbundwerkstoff hergestellt ist, besteht eine weitere Möglichkeit darin, an der Innen- oder Außenseite der Maschinenhausverkleidung eine Metallfolie aufzubringen oder die Maschinenhausverkleidung mit einer Lackierung mit Schirmungseigenschaften zu versehen.

Eine weitere Möglichkeit besteht darin meist an der Innenseite einer Maschinenhausverkleidung Schirmungsmatten anzubringen. Aus der CA00265 7037A1 ist eine elektrisch leitfähige als Gittergeflecht ausgeführte Leiterschicht bekannt, welche zur Bereitstellung der schirmenden Wirkung in die Maschinenhausverkleidung integriert ist.

Neben der elektromagnetischen Schirmung des Innenbereichs von Maschinenhäusern von Windturbinen, ist nach der Norm IEC 60364-5-54 vorgeschrieben, dass leitfähigen Konstruktionen, welche an der Außenseite von Maschinenhäusern installiert sind, wie zum Beispiel Handläufe, Sicherungshaken, Steigleitern oder metallische Haltesysteme für Anbauteile, über Vorrichtungen zum Potentialausgleich verfügen. Diese leitfähigen Konstruktionen müssen mit der Potentialausgleichsanlage des Maschinenträgers und der elektrischen Anlage der Windturbine verbunden sein. Denn so wird verhindert, dass es zu einem Spannungsausgleich zwischen elektrisch aufgeladenen Bauteilen und nicht aufgeladenen, bzw. geerdeten Bauteilen über einen Menschen - zum Beispiel eine Wartungsperson im Maschinenhaus - kommt. Ziel ist es, gefährliche Berührungsspannungen zwischen zwei leitfähigen Teilen im Handbereich von 2,5 m zu vermeiden.

Dies wird meist mittels separater Leitungen/Kabel realisiert, die an der Innenseite der Maschinenhausverkleidung und hier an den Wänden und am Dach verlegt bzw. angebracht sind. Dies bewirkt jedoch neben einer zunehmenden Unübersichtlichkeit der elektrischen Anlage auch ein Risikopotential, da bei unsachgemäßer Befestigung der Leitungen und Kabel eine Stolper- bzw. Aufhängegefahr für das WartungsPersonal besteht.

Diese Unübersichtlichkeit wird zusätzlich durch die Verkabelung der Blitzstromableitung erhöht. Die Blitzstromableitung erfolgt von den Fangstangen auf dem Dach der Maschinenhausverkleidung der Windturbine und wird mittels zum Potentialausgleich separat angeordneter Ableitungen, wie z.B. Kabel, Leitungen und/oder Runddraht zur Erdung abgeleitet. Meist werden diese Ableitungen durch das Innere des Maschinenhauses geführt, was im Falle der Blitzstromableitung schwerwiegende Folgen für die Systeme im Maschinenhaus haben kann: Zum einen kann eine Blitzstromableitung durch das Innere von Maschinenhäusern zu einem elektrischen Überschlag von der Blitzstromableitung zu einem benachbarten Konstruktionsteil, zu elektrischen Schaltanlagen, Kabeln und Leitungen führen. Zum anderen kann es bei der Ableitung der großen Blitz-Ströme zu einer Ausstrahlung eines elektromagnetischen Feldes kommen, welches in anderen Leiterschleifen und leitfähigen Konstruktionen Ströme und Spannungen induziert.

Diese Ströme (induzierter Blitzstrom) und Spannungen (Überspannung) können elektrische Anlagen und elektronische Systeme gefährden bzw. zerstören. Durch die lokal konzentrierte Ausstrahlung des Feldes vom Blitzstromableiter werden die Feldkomponenten nicht in ihrer Feldstärke reduziert und kommen so nahezu unvermindert zum Tragen.

Bei einer isolierten Blitzstromableitung und einer fehlenden Verbindung zum Potentialausgleich kann durch den hohen Spannungsfall an der Leitung dementsprechend ein Isolationsdurchschlag erfolgen, welcher dann, aufgrund der hohen Lichtbogentemperaturen, einen Isolationsabbrand hervorrufen kann. Dieser Isolationsbrand kann sich dann auch auf andere Systeme und Bauteile ausbreiten, wodurch es zu erheblichen Schäden oder zur Zerstörung der gesamten Anlage kommen kann.

Auch machen sich bei der parallelen Führung von Blitzstromableitern oder der unsachgemäßen Befestigung dieser Leiter elektrodynamische Querkräfte am Leiter bemerkbar. Als Folgen könnte dies das Abreißen von Leitungen oder auch die Beschädigung anderer Systeme und Bauteile durch die sich bewegenden Leiterabschnitte bewirken.

In der Entwicklung, Konstruktion und Installation von heutigen Windturbinen werden die elektromagnetische Schirmung, der Potentialausgleich und die Blitzstromableitung getrennt betrachtet und ausgeführt.

Eine Aufgabe der Erfindung besteht darin, eine Maschinenhausverkleidung für eine Windturbine bereit zu stellen, welche eine Lösung für die aus dem Stand der Technik genannten Probleme bietet.

Gelöst wird diese Aufgabe durch eine Maschinenhausverkleidung für ein Maschinenhaus einer Windturbine gemäß Anspruch 1. Die Maschinenhausverkleidung ist dabei aus einem Verbundwerkstoff gebildet ist, welcher beispielsweise je eine äußere Schichte aus einem Faserwerkstoff oder Fasermatten, z. B. Glasfasermatten und eine dazwischen liegenden Schaumschicht umfassen kann. Zwischen die Faserschichten des Verbundwerkstoffs ist eine Leiterschicht, beispielsweise ein Netz, ein Gewebe oder eine Beschichtung aus leitfähigem Material zur Bereitstellung einer elektromagnetischen Schirmung des Maschinenhauses integriert. Gleichzeitig ist hierbei die Leiterschicht direkt oder indirekt mit wenigstens einer auf der Außen- oder Innenseiteseite der Maschinenhausverkleidung angebrachten leitfähigen Konstruktion verbunden oder verbindbar. Die Leiterschicht ist hierbei erfindungsgemäß so ausgebildet und derart mit der leitfähigen Konstruktion bzw. den leitfähigen Konstruktionen verbunden oder verbindbar, dass neben einer elektromagnetischen Schirmung auch eine Blitzstromableitung von einer auf der Außenseite der Maschinenhausverkleidung angebrachten leitfähigen Konstruktion und/oder ein Potentialausgleich zwischen wenigstens zwei auf der Außen- oder Innenseite der Maschinenhausverkleidung angebrachten leitfähigen Konstruktionen ermöglicht wird. Diese leitfähigen Konstruktionen können dabei zum Beispiel Handläufe, Sicherungshaken, Steigleitern oder metallische Haltesysteme für Anbauteile, aber auch Kontaktstellen benachbarter Elemente einer aus mehreren Bauteilen bestehenden Maschinenhausverkleidung sein.

Entsprechend umfasst die Windturbine eine Maschinenhausverkleidung, welche erstmalig über eine integrierte Konstruktion verfügt, die sowohl die Funktionen der elektromagnetischen Schirmung, als auch die Funktion des Potentialausgleichs zwischen leitfähigen Konstruktionen an der Maschinenhausverkleidung und/oder sogar die Funktion der Blitzstromableitung von den Blitzfangeinrichtungen zur Erdung kombiniert erfüllt.

Die Basis hierfür bildet ein in den Verbundwerkstoff eingebrachtes Metallgewebe/Metallgitter oder eine Metallbeschichtung, welches als Schirmungsmaterial und als Leiter für Ausgleichs- und/oder Blitzströme fungiert. Die Lösung der Aufgabe, die verschiedenen Funktionen Potentialausgleich und Schirmung und ggf. sogar Blitzstromableitung über ein, in einen Verbundwerkstoff integriertes Metallgewebe/Metallgitter bzw. Metallbeschichtung zu kombinieren, wird u. a. durch ein Leiterelement, also einen leitfähigen Anschluss zwischen der Leiterschicht und den leitfähigen Konstruktionsteilen erfüllt. Weitere Ausführungsformen und -prägungen sind anhand der Inhalte der Unteransprüche offenbart.

Gemäß einer bevorzugten Ausführungsvariante sind in den Verbundwerkstoff so genannte Adapter integriert, welche eine leitfähige Verbindung von der Leiterschicht zu den leitfähigen Konstruktionen und/oder zur Blitzfangeinrichtung ermöglichen. Die Verbindung durch die Adapter und der Leiterschicht kann derart dimensioniert sein, dass sowohl der Potentialausgleich über die Adapter und die Leiterschicht, als auch eine Blitzstromableitung gewährleistet ist. Dazu muss ein ausreichend hoher Leitungsquerschnitt der Leiterschicht selbst und zwischen Leiterschicht und dem Adapter vorgesehen werden.

Eine bevorzugte Ausführung offenbart, dass die Leiterschicht und das Leiterelement, dazu ausgebildet sind, eine elektromagnetische Schirmung des Maschinenhauses und einen Potentialausgleich zwischen leitfähigen Konstruktionen der zu bewirken, eine Blitzableitung jedoch hauptsächlich oder vollends in einem zur Leiterschicht separat verlaufenden, ebenfalls in die Maschinenhausverkleidung des Maschinenhauses integrierten oder daran angeordneten Blitzstromleiter erfolgt. Dabei die Maschinenhausverkleidung umfasst vorteilhafter Weise einen Adapter, an welchem das Leiterelement derart angeordnet ist, so dass der Adapter mit der Leiterschicht einen elektrisch leitenden Verbindungsquerschnitt besitzt, welcher den Vorschriften der IEC 60364-5-54 genügt.

Der Adapter kann eine ein Anschlusselement zum Anschluss von leitfähigen Konstruktionen und eine als das Leiterelement ausgebildete Adapterplatte aus jeweils leitfähigem Material umfassen. Das Anschlusselement, z. B. ein Gewindebolzen, ist elektrisch leitend mit der Adapterplatte und die Adapterplatte elektrisch leitend mit der Leiterschicht verbunden ist. Die Adapterplatte ist dabei zwischen den Schichten der Maschinenhausverkleidung angeordnet. Dabei ist die Adapterplatte vorzugsweise mit einem elektrisch leitenden Kleber oder anderweitig elektrisch leitend mit dem Netz/Metallgitter bzw. der Metallbeschichtung der Maschinenhausverkleidung verbunden. Im montierten Zustand sind die auf der Außenseite der Maschinenhausverkleidung angebrachten leitfähigen Konstruktionen, wie zum Beispiel Handläufe, Sicherungshaken, Steigleitern oder metallische Haltesysteme für Anbauteile, elektrisch leitend mit dem Bolzen des Adapters verbunden.

Besonders bevorzugt besitzen die Kontaktflächen zwischen leitfähiger Konstruktion und Bolzen, zwischen Bolzen und Adapterplatte sowie zwischen Adapterplatte und Metallgewebe/Metallgitter bzw. Metallbeschichtung jeweils eine Querschnittfläche, die den Anforderungen der Normen IEC 61400-24 (Blitzschutz) und/oder IEC 60364-5-54 (Schutzpotentialausgleichsleiter) genügen.

Gemäß einer alternativen Ausprägung der Leiterelemente ist das Leiterelement als Adapter ausgebildet, der zumindest teilweise zwischen der Außenschicht und Innenschicht des Verbundwerkstoffs der Maschinenhausverkleidung angeordnet, wobei es die Außenschicht oder die Innenschicht der Maschinenhausverkleidung durchragt. Besonders bevorzugt ist der Adapter als Federkontakt ausgebildet, welche aus der Maschinenhausverkleidung herausragen. Solche Federkontakte können besonders bevorzugt aus Blattfedern gebildet sein, die mit der Leiterschicht verbunden ist und durch Schichten des Verbundmaterials nach außen an eine äußere Oberfläche oder auch nach innen an eine innere Oberfläche durchragen. Solche Federkontakte sind besonders einfach während der Herstellung des Verbundmaterials einzubringen und gemäß der gewünschten Wirkung herzustellen. Ein von der o. g. Erfindung unabhängiger Aspekt ist dabei, dass in jedes dieser Teilelemente der Maschinenhausverkleidung eine als Metallnetz, ein Metallgitter, ein Metallgewebe oder eine Metallbeschichtung ausgebildete Leiterschicht integriert, wobei jedes dieser Teilelemente wenigstens eine Anschluss-Schnittstelle besitzt, über welche die Leiterschicht des jeweiligen Teilelements mit einem im zusammengesetzten Zustand benachbarten Teilelement der Maschinenhausverkleidung elektrisch leitend verbunden ist. Diese Anschlussstellen können auch gleichzeitig dazu dienen, die Elemente mechanisch zu verbinden und zu montieren.

Vorzugsweise weisen die Anschluss-Schnittstellen zwischen zwei Teilelementen dabei eine Querschnittsfläche auf, die den Anforderungen der Norm IEC 60364-5-54 genügen, sodass ein Potentialausgleich zwischen den auf beiden Teilelementen aufgebrachten leitfähigen Konstruktionen über das Netz, das Gewebe oder die Beschichtung der beiden Teilelemente und die Anschluss-Schnittstelle(n) erfolgen kann. Für den Fall, dass die integrierte Leiterschicht auch für die Ableitung von Blitzströmen dienen soll, so muss die elektrische Querschnittsfläche der Norm IEC 61400-24 genügen.

Gemäß einer bevorzugten Ausführungsform werden die Anschlussstellen durch Federkontakte und Kontaktflächen gebildet. Solche Federkontakte sind besonders bevorzugt aus Blattfedern gebildet.

Gemäß einer weiteren Ausführungsform der Erfindung, ist neben dem Potentialausgleich auch die Blitzstromableitung über eine in die Maschinenhausverkleidung integrierte leitfähige Konstruktion realisiert. Gemäß einer Ausprägung ist in das Netz, das Gewebe bzw. die Beschichtung, welche zum Potentialausgleich und zur elektromagnetischen Schirmung dient, Mittel zur Blitzstromableitung integriert. Dies kann vorzugweise dadurch realisiert werden, indem entlang einer Stecke des Netzes, welche von einer auf der Außenseite der Maschinenhausverkleidung angebrachten leitfähigen Fangstange für Blitzentladungen bis zur Erdung der Windturbine reicht, mit einem vergrößerten Leitungsquerschnitten ausgelegt ist, sodass ein Großteil der Blitzstromableitung über diese Querschnitte erfolgt und das gesamte Netz/Gewebe bzw. die Metallbeschichtung keinen Schaden durch die Blitzstromableitung nehmen kann. Die dabei leitende Querschnittsfläche muss der Norm IEC 61400-24 genügen.

Gemäß einer alternativen, weiteren Ausführung der Erfindung sind die Blitzstromableitung und der Potentialausgleich separat und galvanisch voneinander getrennt ausgeführt. Dabei ist vorzugsweise die Blitzstromableitung auch in Form eines Leiters in die Maschinenhausverkleidung integriert, ist aber von dem Netz, dem Gewebe bzw. der Beschichtung, welche zum Potentialausgleich und zur elektromagnetischen Schirmung dient, isoliert. In diesem Fall ist der Leiter der Blitzstromableitung in Bezug auf das Innere des Maschinenhauses weiter außerhalb in der Maschinenhausverkleidung integriert, als die Leiterschicht.

Vorzugsweise sind die Leiterschicht und/oder die separate Blitzableitung über Anschluss-Schnittstellen elektrisch leitend mit dem Potentialausgleichssystem des Maschinenträgers verbunden.

An dem Potentialausgleichssystem des Maschinenträgers sind alle leitfähigen Konstruktionen im Maschinenhaus angeschlossen, wie z.B. die metallischen Gehäuse des Generators und des Getriebes und der elektrischen Anlage. Dadurch können Potentialunterschiede zwischen dem Blitzfänger, der Blitzstromableitung und den anderen, im Maschinenhaus befindlichen Systemen und Komponenten vermieden werden. Dies reduziert die Gefahr von elektrischen Überschlägen bzw. Durchschlägen durch Isolationsmaterial.

Durch die leitfähige Verbindung der Leiterschicht über Leiterelemente zu den leitfähigen Konstruktionsteilen (Sicherungshaken, Handläufen, Steigleitern, metallische Haltesysteme für Anbauteile) an der Maschinenhausverkleidung und durch die Verbindung des Metallgewebes/Metallgitters mit dem Potentialausgleichssystem von Maschinenträger und elektrischer Anlage wird die allgemeine Anforderung an den Potentialausgleich in elektrischen Niederspannungsanlagen nach IEC 60364 erfüllt. Dadurch wird die Funktion von elektrischen Schutzeinrichtungen im Fehlerfall gewährleistet (z.B. Auslösen der Sicherung eines fehlerhaften elektrischen Kreises mit Erdberührung, Erdschluss).

Durch die genannte Erfindung entfallen separate Leitungen für den Potentialausgleich sowie zur Blitzstromableitung. Die Systemtechnik innerhalb eines Maschinenhauses wird wesentlich übersichtlicher und gefahrenfreier gestaltet. Durch die vollständige Einbettung des Metallgewebes/Metallgitters bzw. der Metallbeschichtung, der Potential-Ausgleichsleitungen und der Blitzableitungen in den Verbundwerkstoff sind diese nicht den Witterungseinflüssen (Luftfeuchtigkeit, Nässe durch Kondenswasserbildung bei Temperaturschwankungen) ausgesetzt. Dadurch reduziert sich die Gefahr von Korrosion an den Leitungen und am Metallgewebe. Dies steigert die Wartungsfreundlichkeit und erhöht die Lebensdauer dieses Systems im Vergleich zu herkömmlichen Systemen. Durch die Nutzung eines Materials für mehrere Anwendungen können zudem Kosten eingespart werden.

Gegenüber den herkömmlichen separaten Ausführungen von elektromagnetischer Schirmung, Potentialausgleich und ggf. sogar Blitzstromableitung wird bei der Erfindung eine Kombination dieser miteinander erreicht. Dadurch lassen sich die physikalischen Effekte unter effizienten Materialeinsatz positiv ausnutzen, um die mechanischen, elektrischen und elektronischen Systeme innerhalb des Maschinenhauses zu schützen (Erhöhung der Anlagenverfügbarkeit). Dies spart Kosten in der Produktion, Herstellung und Installation, denn aufgrund der kompakten und modularen Bauweise lässt sich die Installationszeit erheblich reduzieren. Weiterhin wird die Installation durch die vordefinierten Befestigungs- und Anschlusspunkte erleichtert. Dies mindert auch die Anzahl von notwendigem Zubehör oder Werkzeugen auf den Baustellen. Durch die erheblich vereinfachte Installation und die Reduzierung der Installationsschritte mindert sich auch die Unfallgefahr während der Installationsmaßnahmen. Ein weiterer positiver Effekt ist die Umsetzung einer Blitzschutzzone 1 (gemäß dem Blitzschutzzonenkonzept nach IEC 62305) innerhalb des Maschinenhauses. Dadurch lassen sich weitere Kosten beim inneren Blitzschutzsystem, wie Überspannungsschutzgeräte, metallische Kabeltrassen, Kabelschirmung, einsparen, was wiederum in einer Kostenoptimierung resultiert.

Ein maßgebliches Merkmal des modernen Injektions-Verfahrens (z.B. durch Vakuuminjektion) für Verbundwerkstoffe ist die allseitig luftdicht verschlossene Form für die Verbundwerkstoffkomponente, welche über Zu- und Abflüsse (Füll- und Saugstutzen) für das Füllmaterial (Injektionsharz/Gießharz) verfügen. Diese Formen sind Bestandteil eines Pumpenkreislaufes, welchen der Injektionsharz durchläuft und somit in der Form verteilt wird. Durch den allseitigen Verschluss der Form ist eine Herausführung von leitenden Verbindungen insbesondere von dem Adapter oder den Anschluss-Schnittstellen, welche(r) zum Anschluss der leitfähigen Konstruktionen dient und im Inneren der Form mit der integrierten Leiterschicht verbunden ist/sind, schwierig. Um diese multifunktionale Maschinenhausverkleidung in einem Injektions-Verfahren für Verbundwerkstoffe zu realisieren, ist die Anwendung einer neuen Fertigungstechnologie notwendig.

Dazu dient folgendes erfindungsgemäßes Verfahren: Das Befüllen bzw. das Absaugen des Injektionsharzes/Gießharzes wird nicht über die für das Injektions-Verfahren typischen wieder verwertbaren Füll- und Saugstutzen vorgenommen, sondern erfolgt über die leitfähige Adapterkonstruktionen und/oder die Anschluss-Schnittstellen.

Diese Adapterkonstruktionen bestehen vorzugsweise im Wesentlichen aus einem Gewindebolzen mit einer axialen Innenbohrung und einer, an den Gewindebolzen angebrachten (angeschweißt oder angelötet, je nach Werkstoff) Adapterplatte. Durch die Innenbohrung ist das Befüllen bzw. Absaugen des Injektionsharzes gewährleistet. Die Adapterplatte ist durch einen leitfähigen Kleber mit dem Metallgewebe verbunden.

Im Gegensatz zum regulären Herstellungsprozess der Verbundwerkstoffkomponente erfolgt ein Befüllen und oder Absaugen dementsprechend über die Vorrichtungen, welche Teil der Maschinenhausverkleidung sind und aus der Form herausragen. Dadurch wird eine optimierte Verbindung zwischen Herstellungsprozess und der eigentlichen Anwendung geschaffen. Auf diese Weise lassen sich leitfähige Verbindungen aus dem Verbundwerkstoff herausführen, ohne den Herstellungsprozess erheblich zu beeinflussen. Es müssen keine neuen Maschinen eingesetzt werden, auch die Produktionsprozesskette wird dadurch nicht wesentlich berührt.

Gemäß einer weiteren Ausführung werden auch die Anschluss-Schnittstellen, welche zur elektrischen Verbindung der einzelnen Teilelemente der Maschinenhausverkleidung untereinander dienen, für die Injektion und/oder das Absaugen des Harzes bei dem Injektions-Verfahren für Verbundwerkstoffe verwendet. Vorzugsweise sind auch die Anschluss-Schnittstellen dementsprechend hohlprofilförmig ausgebildet und können so als "Füll- und Absaugstutzen" verwendet werden. Demzufolge werden durch den Einsatz von Gewindehohlbolzen und/oder hohlprofilförmigen Anschluss-Schnittstellen als Füll- bzw. Saugstutzen das Herstellungsverfahren und die Zielanwendung in einem Verfahren kombiniert.

Die alternative Ausbildung der Adapter als Federkontakte, erweist sich gerade bei dem Vakuum-Injektions-Verfahren als besonders vorteilhaft, da die Blattfedern einfach in die Formen und zwischen die Schichten der Fasern oder der Fasermatten eingelegt werden, und dabei die Faserschichten durchgreifen, welche die zu kontaktierende Oberfläche bilden. Dabei kann das Leiterelement, ausführbar als Blattfeder, vor dem Einbringen einer Faserschicht oder nach dem Einbringen einer Faserschicht angeordnet werden. Denkbar ist zum Beispiel auch, dass das Leiterelement an der Herstellungsform befestigt wird, danach die Faserschicht, durch Sprühen von Faserstücken oder Einlegen von Fasermatten eingebracht wird. Dann wird an der Stelle, an der das Leiterelement an der Herstellungsform angeordnet ist, eine Öffnung in die Faserschicht gemacht. Durch diese kann das Leiterelement die Schicht durchgreifen. Bei der Produktion werden die Blattfedern durch die Herstellungsform platt gedrückt, so dass in der Form keine große explizite Aufnahme für den Adapter vorgesehen werden muss. Dadurch verringert sich der Herstellungsaufwand erheblich. Um den Kontakt der Blattfeder mit der Oberfläche nach dem Herstellungsvorgang herzustellen, muss lediglich die obere Harzschicht entfernt werden, die die Blattfeder bedeckt, beispielsweise durch schlichtes Abkratzen oder durch Abschleifen.

Weitere Einzelheiten der Erfindung gehen aus den Zeichnungen anhand der Beschreibung hervor. In den Zeichnungen zeigt:
- Fig. 1: eine Windturbine mit geschirmten Maschinenhaus,
- Fig. 2: eine Querschnittsdarstellung der Maschinenhausverkleidung mit integriertem Adapter,
- Fig. 3: eine Querschnittsdarstellung gemäß Fig. 2 einer zweiten Ausführungsform der Maschinenhausverkleidung mit integriertem Adapter,
- Fig. 4: das elektrische Schaltbild des Potentialausgleichs einer Windturbine,
- Fig. 5: eine Explosions-Ansicht der aus mehreren Teilelementen zusammengesetzten Maschinenhausverkieidung,
- Fig. 6: a - d eine erste Ausführungsform einer Anschluss-Schnittstelle,
- Fig. 7: a - c eine zweite Ausführungsform einer Anschluss-Schnittstelle,
- Fig. 8: eine dritte Ausführungsform einer Anschluss-Schnittstelle, und
- Fig. 9: eine Querschnittsdarstellung der Maschinenhausverkleidung mit einer dritten Ausführungsform eines Adapters.

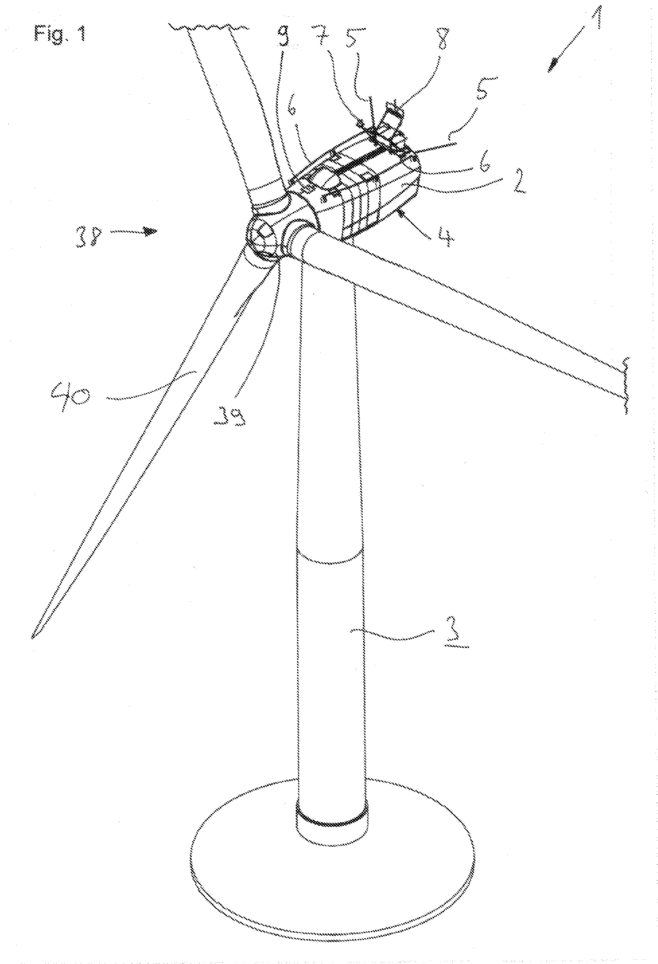

In Figur 1 ist eine Windturbine 1 mit einem Turm 3 und einem auf dem Turm 3 drehbar gelagertem Maschinenhaus 2 dargestellt. In dem Maschinenhaus 2 ist ein Triebstrang vorgesehen, der eine auf einem Maschinenträger 41 drehbar gelagerte Rotorwelle 35 umfasst, die ggf. über ein Getriebe 36 mit einem Generator 37 verbunden ist. An der Rotorwelle 35 ist ein Rotor 38 angeordnet, der wiederum eine Nabe 39 und mindestens ein Rotorblatt 40 umfasst.

Auf dem Maschinenhaus 2 sind mehrere elektrisch leitende Bauteile montiert, wie Handlauf 6, Befestigungsösen, Blitzfänger 5, Flugleuchte 7, Anemometer 8 und Ausstieg 9. Damit es infolge von elektrischen Potentialunterschieden zwischen den einzelnen elektrisch leitenden Bauteilen 5, 6, 7, 8, 9 nicht zu Personenschäden kommen kann, muss ein Potentialausgleich zwischen diesen Bauteilen 5, 6, 7, 8, 9 sichergestellt werden. Darüber hinaus muss der Blitzfänger 5 mit der Erdung 29 verbunden sein, damit im Falle eines Blitzeinschlags der Blitzstrom abgeleitet werden kann. Die Maschinenhausverkleidung 4 ist aus einem Verbundwerkstoff gebildet ist, welcher beispielsweise je eine äußere Schicht aus Harz und Faserns oder Fasermatten 13a, 13b, z. B. Glasfasern und eine dazwischen liegenden Schicht 12, insbesondere eine Schaum- und/oder Isolationsschicht 12, umfassen kann. Zwischen die Faserschichten des Verbundwerkstoffs ist eine Leiterschicht 17, beispielsweise als ein Netz 17 ausgeführt, zur Bildung eines farradayischen Käfigs angeordnet.

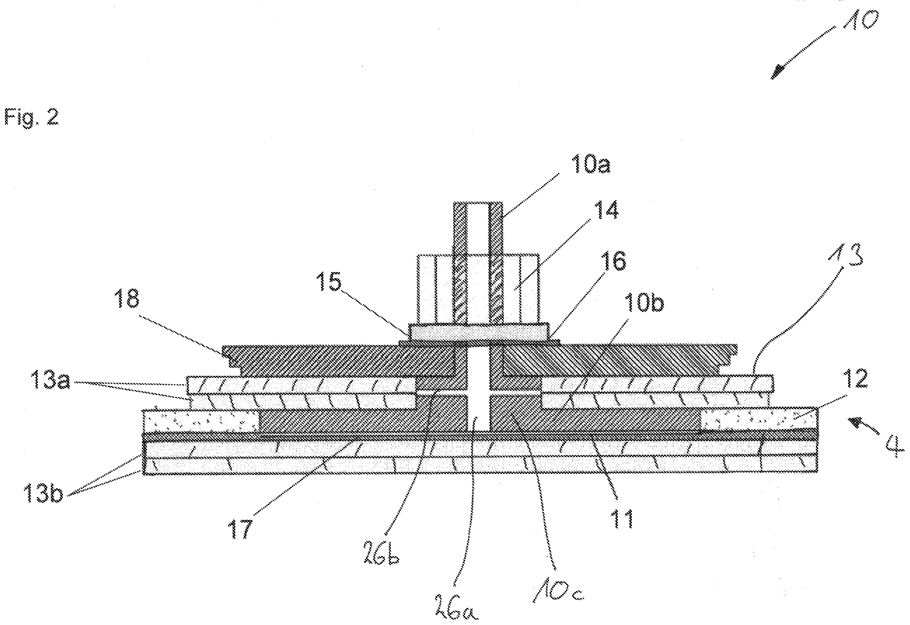

Um die Oberseite 13 der Maschinenhausverkleidung 4, insbesondere die auf dem oberen Maschinenhausverkleidungselement 4d angebrachten elektrisch leitenden Bauteile 5, 6, 7, 8, 9 mit dem in der Maschinenhausverkleidung 4 integrierten Netz 17 zu verbinden, sind Adapter 10 vorgesehen, die das Leiterelement zu mindest teilweise inkorporieren. Figur 2 zeigt einen Querschnitt eines Ausschnitts gemäß einer ersten Ausführungsform der Maschinenhausverkleidung 4 mit einem Adapter 10. Der Adapter 10 umfasst ein als einen Bolzen, vorzugsweise Gewindebolzen, ausgeführtes Anschlusselement 10a, eine Adapterplatte 10b und wahlweise einen die Adapterplatte 10b und Bolzen 10a verbindenden Übergangsabschnitt 10c. Die Bauteile 10a, 10b, 10c des Adapters 10 sind vorzugsweise einstückig ausgebildet. Zudem umfasst der Adapter 10 Innenbohrungen 26a, 26b welche zum Befüllen der Schichten 12, 13a, 13b mit Harz dienen. Zwischen den äußeren Glasfasermatten 13a, 13b ist das Netz 17 integriert, welches über elektrisch, vorzugsweise über einen leitfähigen Kleber 11, mit dem an der Adapterplatte 10b ausgebildeten Leiterelement elektrisch leitend verbunden ist. Hier erkennbar ragt der als Gewindebolzen ausgebildete Anschlusselement 10a eines jeweiligen Adapters 10 zur Herstellung einer elektrisch leitfähigen Verbindung zwischen dem Netz 17 und einem der elektrisch leitfähigen Bauelementen 5, 6, 7, 8, 9 aus der Oberfläche der Maschinenhausverkleidung 4 heraus. An den Stellen, an denen keine Adapterplatte 10b zwischen den Faserschichten 13a, 13b liegt, kann eine Isolationsmatte 12 und/oder eine Schaumschicht zwischen den Schichten 13a, 13b vorgesehen sein. Somit ist die Wandstärke der Maschinenhausverkleidung 4 an einer Stelle mit Adapter 10 nicht oder kaum größer die als die Wandstärke der Maschinenhausverkleidung 4 an einer Stelle ohne Adapter 10. Denkbar ist natürlich auch, dass auch in dem Bereich der Adapterplatte 10b eine Isolationsschicht und/oder Schaumschicht zwischen den Schichten 13a 13b vorgesehen ist. Alternativ kann - nicht dargestellt - eine Ausnehmung in einer oder mehreren Schichten der Glasfasermatte 13a und/oder 13b vorgesehen sein, wodurch die Dicke der Adapterplatte 10b kompensiert wird.

Während der Herstellung der Maschinenhausverkleidung 4 im Vakuum-Injektions-Verfahren ist auf der Oberseite 13 der oberen Glasfasermatte 13a eine Formabdeckung 18 aufgebracht, welche mittels einer Gewindemutter 14, einer Unterlegscheibe 15 und einer Dichtung 16 zusammen mit dem hier nicht dargestellten unteren Formteil eine luftdichte Form bildet. Auf diese Weise ist es möglich, den hohlzylindrischen Gewindebolzen 10a des Adapters 10 als Befüllungs- und/oder Absaugstutzen für Harz der Vakuumform zu verwenden. Dabei wird durch die Innenbohrungen 26a, 26b die Faserschichten 13a, 13b mit Harz befüllt, wobei die Innenbohrungen 26a, 26b im Übergangsbereich 10c zur Befüllung der oberen Faserschicht 13a dienen. Nach dem Aushärten des Harzes werden die Mutter 14, die Unterlegscheibe 15 und die Dichtung 16 entfernt.

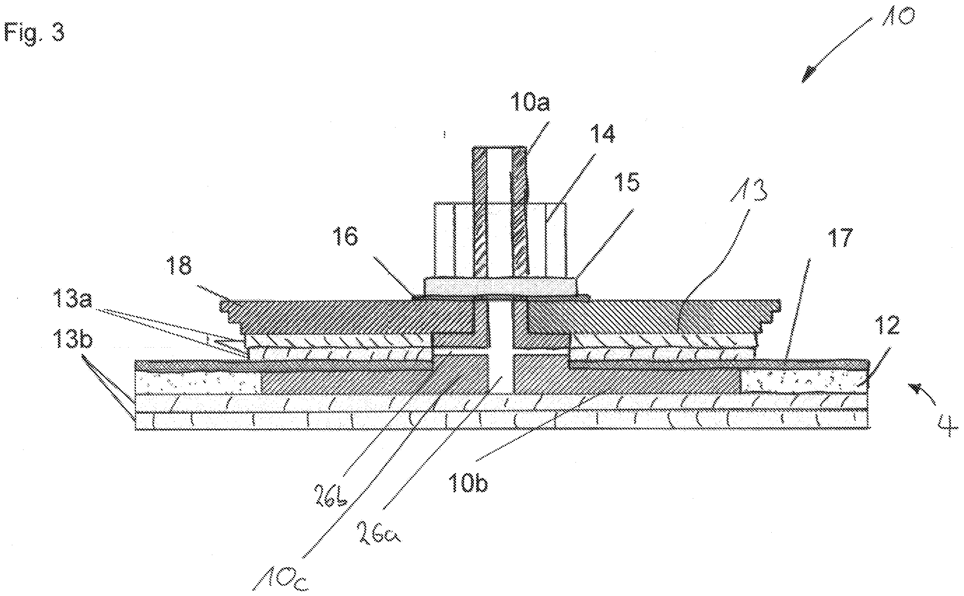

In Figur 3 ist eine weitere Ausführungsform des Aufbaus der Maschinenhausverkleidung 4 dargestellt. Im Unterschied zu der Ausführungsform gemäß Figur 2 ist hier die als Leiterelement fungierende Adapterplatte 10b des Adapters 10 unterhalb des Netzes 17 angeordnet. Dabei weist das Netz 17 eine Aussparung auf, welche von dem Adapter 10, vorzugsweise durch den Übergangsbereich 10c des Adapters 10 durchragt wird. Wahlweise kann hierbei auf die Verwendung eines leitfähigen Klebers verzichtet werden.

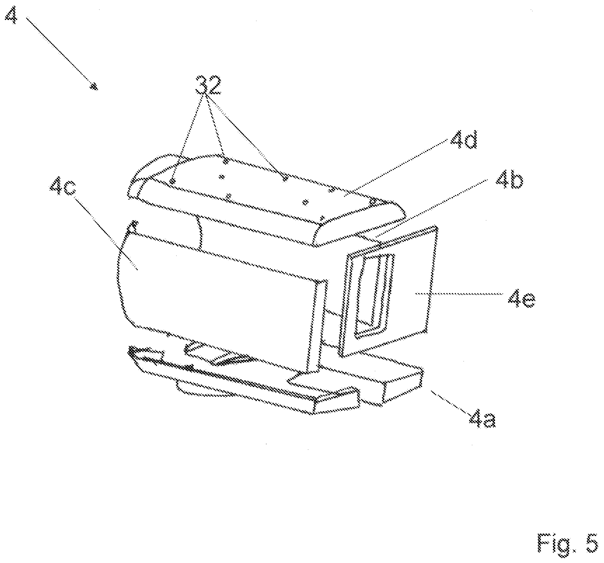

In Figur 5 ist die aus mehreren Teilen zusammengesetzte Maschinenhausverkleidung 4 des Maschinenhauses 2 dargestellt. Es sei betont, dass die beschriebene Ausführungsform der modularen Maschinenhausverkleidung 4 nicht limitierend auf die Erfindung wirkt. In dem hier dargestellten Fall ist die Maschinenhausverkleidung 4 aus mindestens einem unteren Element 4a, zwei seitlichen Elementen 4b und 4c, sowie einem oberen 4d und einem hinteren Element 4e zusammengesetzt. In den einzelnen Elementen 4a, 4b, 4c, 4d, 4e ist eine als Netz 17 ausgebildete Leiterschicht integriert, welches wie ein faradayscher Käfig für den Innenraum des Maschinenhauses 2 wirkt. Damit das Netz 17 überall ausgebildet ist, müssen die Netze 17 der einzelnen Elemente 4a, 4b, 4c, 4d und 4e der Maschinenhausverkleidung 4 elektrisch leitend miteinander verbunden sein und aneinander angrenzen, um keinen nicht vom Netz 17 abgedeckten Bereich zu bilden, wodurch die elektromagnetische Schirmungswirkung beeinträchtigt wäre. Dafür sind an den einzelnen Elementen 4a, 4b, 4c, 4d, 4e Anschlussstellen 20 vorgesehen.

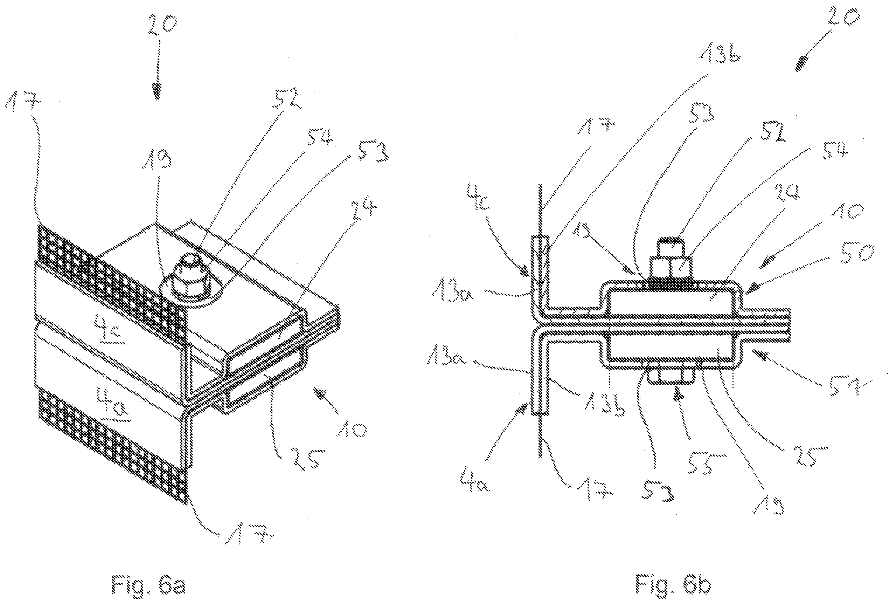

In Figur 6a bis 6d ist eine erste Ausführungsform einer der Anschlussstellen 20 in einer perspektivischen Ansicht dargestellt. Mit Hilfe derartiger Anschlussstellen 20 werden die einzelnen Elemente 4a, 4b, 4c, 4d, 4e der Maschinenhausverkleidung 4 des Maschinenhauses 2 elektrisch leitend miteinander verbunden. Gleichzeitig kann diese Anschlussstelle 20 als mechanisches Verbindungselement zur Montage der einzelnen Elementen 4a, 4b, 4c, 4d, 4e in eine zusammenhängende und stabile Maschinenhausverkleidung 4 dienen. In dem hier dargestellten Ausschnitt sind das untere Elemente 4a und das seitliche Element 4c der Maschinenhausverkleidung 4 miteinander verbunden.

Zwischen den Faserschichten 13a, 13b ist das Netz 17 angeordnet und die Kanten der Elemente 4a, 4c der Maschinenhausverkleidung 4 sind als Flansche 50, 51 ausgebildet, die in Richtung des Innenraums des Maschinenhauses 2 abgewinkelt sind, sodass sie mit Hilfe von Verbindungsmitteln 55, z. B. Gewindebolzen 52, Unterlegscheibe 53 und Muttern 54, miteinander verbunden werden können. Gemäß der hier dargestellten Ausführungsvariante sind in die flanschförmig abgewinkelten Kanten bzw. Flansche 50, 51 der Elemente 4a, 4c der Maschinenhausverkleidung 4, elektrisch leitende plattenförmige Leiterelemente 24, 25, vorzugsweise Metallplatten 24, 25, integriert, welche elektrisch leitend mit dem in dem jeweiligen Element 4a, 4c angeordneten Netzen 17 verbunden sind. Die Leiterelemente 24 oder 25 im Zusammenwirken mit den Verbindungsmitteln 55 gelten hierbei als Adapter.

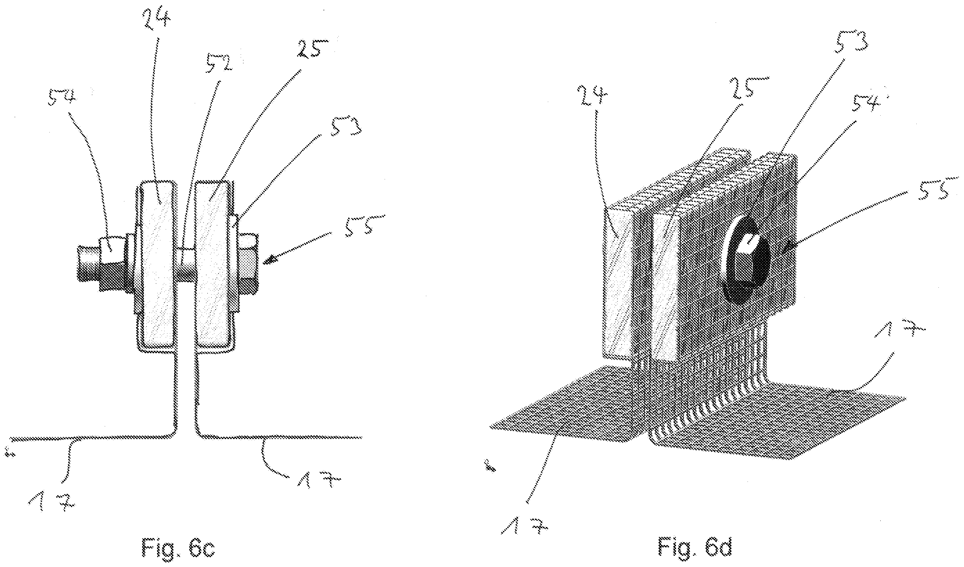

In den Figuren 6c und 6d ist die Anschlussstelle 20 ohne die Schichten 13a, 13b dargestellt. Es ist zu erkennen, dass das Netz 17 jeweils um die Metallplatten 24, 25 herum angeordnet sind. Die Verbindungsmittel 55 sind elektrisch mit den Metallplatten 24, 25 verbunden, so dass eine elektrische Verbindung von dem Netz 17 des Elements 4c über die Metallplatte 24, die Unterlegscheibe 53, den Gewindebolzen 52, die Unterlegscheibe 53 die Metallplatte 25 zum Netz 17 des Elements 4a zuverlässig wirksam ist. Um den elektrischen Kontakt sicherzustellen, kann jeweils in die Schicht 13b eine Ausnehmung 19 für die Unterlegscheiben 53 bis auf die Metallplatte 24 bzw. 25, z. B. durch Fräsen, eingebracht werden. Hierdurch ist es möglich eine definierte elektrische Verbindung zwischen den beiden Netzen 17 der Elemente 4a und 4c in der Maschinenhausverkleidung 4 des Maschinenhauses 2 zu erreichen, wodurch ein Potentialausgleich zwischen diesen Netzen 17 und damit eine lückenlose Schirmung und/oder eine Blitzstromableitung erfolgen kann. Weiterhin wird durch die geometrische Anordnung der Netze 17 in den Flanschen 50, 51 das Netz 17 vollständig und ohne Schlitze oder Lücken in der gesamten Maschinenhausverkleidung 4 geführt, wodurch die elektromagnetische Abschirmung des Innenraums des Maschinenhauses 2 optimiert ist. Die Vollständigkeit des Netzes 17 um den Innenraum ist in sofern sehr wichtig, da bereits kleine Lücken die Schirmungswirkung drastisch reduzieren, insbesondere durch Interferenz-Erscheinungen an Schlitzen oder Öffnungen im farradayischen Käfig.

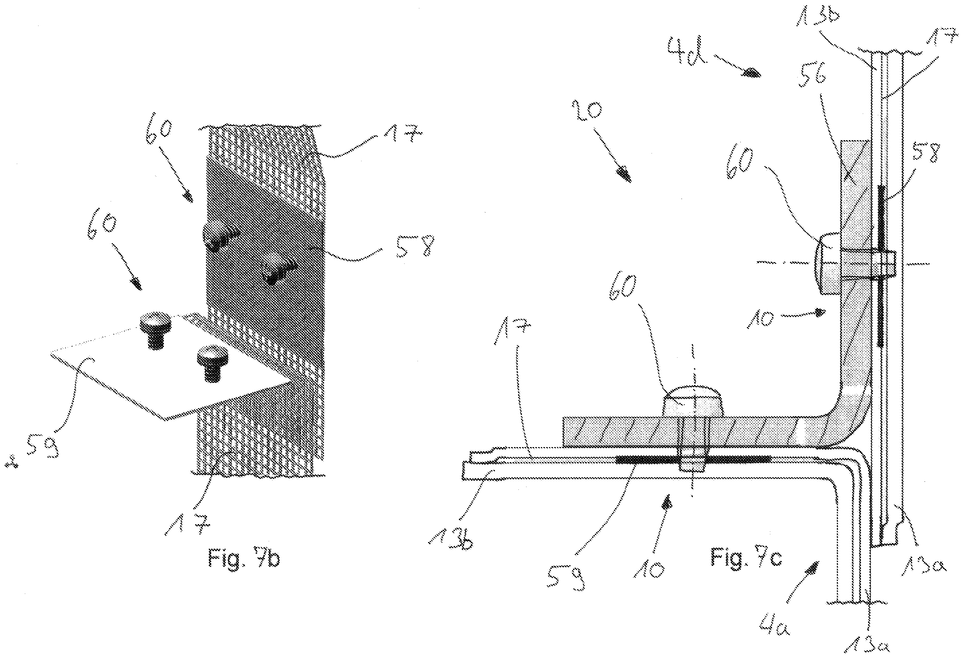

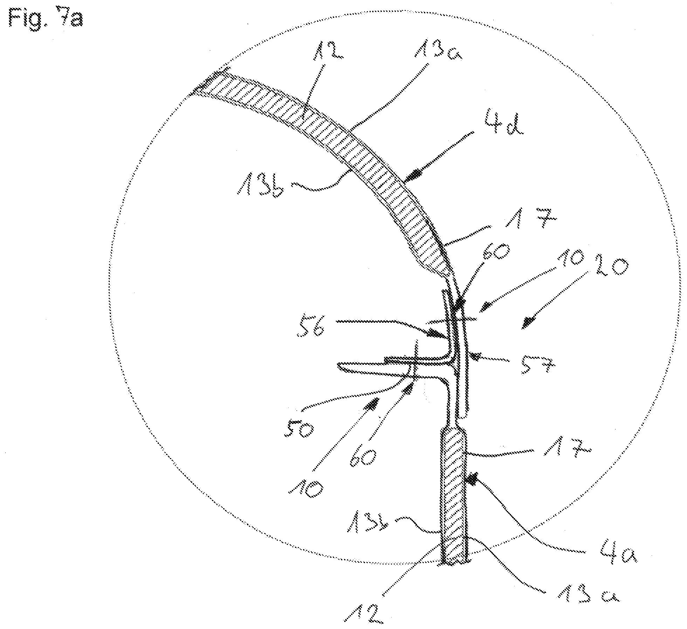

In Figur 7a bis 7c ist eine weitere Ausführungsform der Anschlussstelle 20 angeführt, exemplarisch hier nun eine Anschlussstelle 20 zwischen dem Dachelementen 4d und Seitenelement 4c der Maschinenhausverkleidung 4. Dabei ist nur die Kante eines Elements 4a als Flansch 50 nach Innen ausgebildet, wobei das Element 4c von dem Endabschnitt 57 des Elements 4d überlappt wird. Dies kann jedoch auch umgekehrt sein. Die geometrische Anordnung des Flansch 50 und der Überlappung durch den des Endabschnitt 57 bedingt die lückenlose Abschirmung des Innenraums des Maschinenhauses 2.

In dem Endabschnitt 57 des Elements 4d und in dem Flansch 50 sind jeweils - analog zum vorangestellten Ausführungsbeispiel - plattenförmige Leiterelemente 58, 59, vorzugsweise Metallplatten 58, 59 integriert, welche elektrisch leitend mit dem in dem jeweiligen Element 4c, 4d angeordneten Netzen 17 verbunden sind. Der Endabschnitt 57 und der Flansch 50 sind über einen Träger 56 und Verbindungsmittel 60 mechanisch und elektrisch miteinender verbunden, wobei die Verbindungsmittel 60 wiederum elektrisch mit den Metallplatten 58, 59 verbunden sind. Somit wird die elektrische Verbindung zwischen den einzelnen Elementen 4d und 4c vom Netz 17 Elementen 4d über die Metallplatte 58, das Verbindungsmittel 60, den Träger 56, das Verbindungsmittel 60 und über die Metallplatte 59 wieder in das Netz 17 des Elements 4a hergestellt wird. Die Verbindungsmittel 60 können als selbstschneidende Schrauben ausgeführt sein.

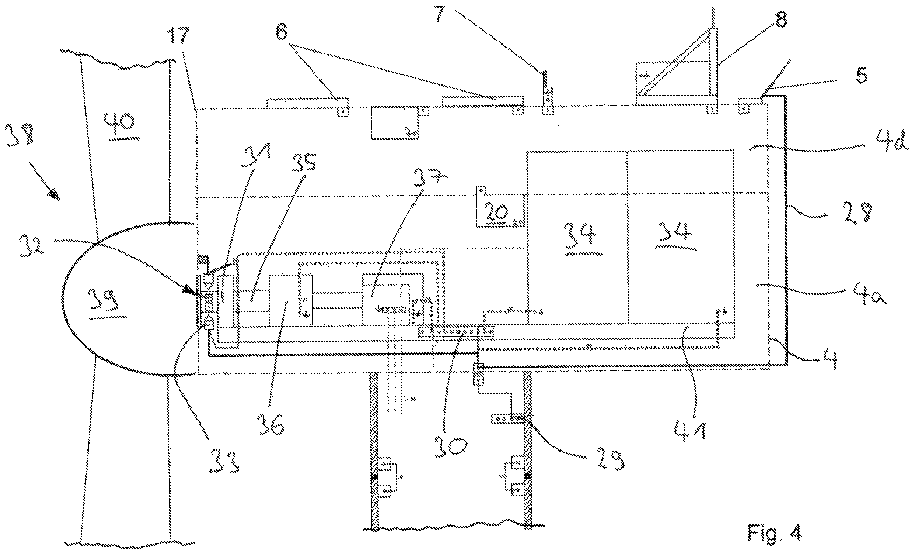

In Figur 4 ist das elektrische Schaltbild des Potentialausgleichs und der farradayische Käfig des Maschinenhauses 2 gemäß einer bevorzugten Ausführungsform der erfindungsgemäßen Windturbine 1 dargestellt. Zu erkennen ist hier, dass auf dem Maschinenhaus 2 Bauteile wie Blitzfänger 5, Handläufen 6, Flugleuchte 7, Anemometer 8 und Ausstieg 9 angeordnet sind. Die Maschinenhausverkleidung 4 weist ein Netz 17 auf, mit welchem die o. g. Bauteile 5, 6, 7, 8 über Adapter 10 erfindungsgemäß verbunden sind, und somit ein Potentialausgleich zwischen den einzelnen Bauteilen 5, 6, 7, 8 ermöglicht ist. Unterschiedliche Elemente 4d und 4c der Maschinenhausverkleidung 4 sind über die Adapter 10 der Anschlussstelle 20 miteinander verbunden Am Maschinenträger 41 ist ein Erdungsanschluss 30 vorgesehen, mit der die Erdungen von Komponenten in dem Maschinenhaus 2, wie das Getriebe 36, das Hauptlager 31, der Generator 37, eine Rotorerdung 32 gemäß der deutschen Patentanmeldung DE 10 2009 017 824 und Schaltschränke 34 verbunden sind. Das Netz 17 der Maschinenhausverkleidung 4 ist auch mit dem Erdungsanschluss 30 verbunden, wobei der Erdungsanschluss 30 wiederum mit der Erdung 29 des Turms 3 der Windturbine 1 verbunden ist. Somit ist der Potentialausgleich der einzelnen Komponenten gewährleistet.

Zusätzlich kann der Blitzfänger 5 über einen Blitzableiter 28 und die Übertrager 33 für Blitzstrom der Rotorerdung 32 auch mit dem Erdungsanschluss 30 am Maschinenträger 41 verbunden sein.

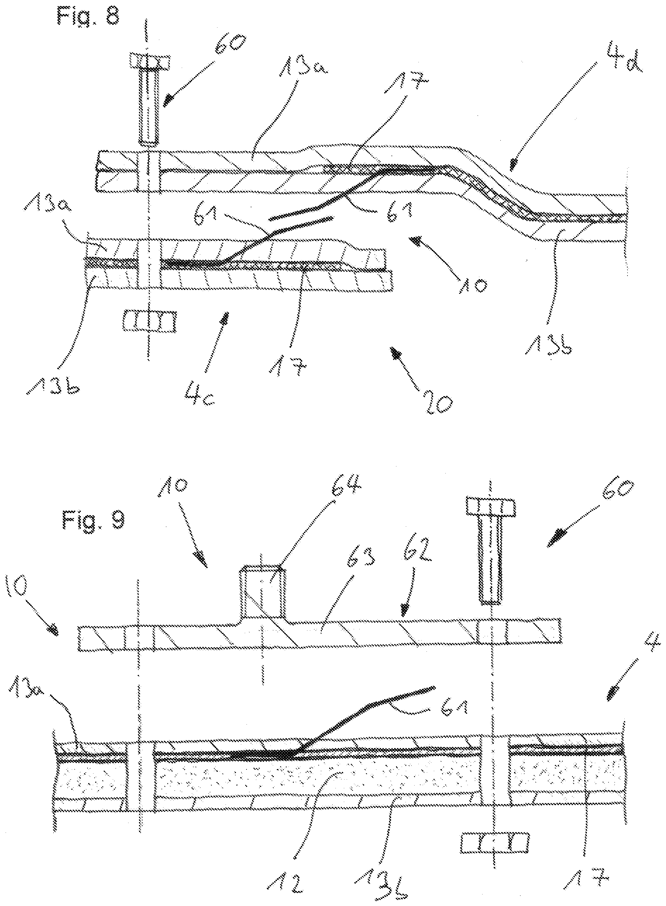

Fig. 8 führt eine weitere Ausführungsform der Anschlussstelle 20 zwischen den Endbereichen von zwei Elementen 4d und 4 c der Maschinenhausverkleidung 4 an. Die Elemente 4d und 4c können mit Hilfe von Verbindungsmitteln 60, z. B. Schrauben, miteinander fest verbunden werden. Dabei ist in beiden Elementen 4d und 4c jeweils ein Adapter 10 als Blattfeder 61 ausgeführt angeordnet. Die Blattfeder 61 ist zu einem Teil zwischen den Faserschichten 13a und 13b des jeweiligen Elements 4d, 4c in direktem elektrischem Kontakt mit dem Netz 17 angeordnet. Dieser zwischen den Schichten 13a und 13b liegende Teil der Blattfeder 61 gilt somit als das Leiterelement gemäß der Erfindung. Die Blattfedern 61 durchragen die jeweils dem anderen Element 4d bzw.4c zugeordnete Schicht 13a bzw. 13b des Elements 4c bzw. 4d. Sind die beiden Elemente 4d und 4c miteinander verbunden, so beaufschlagen sich die Adapter 10, das heißt die Blattfedern 61 der Anschlussstelle 20 gegenseitig, wodurch ein elektrischer Kontakt zwischen den Netzen 17 der beiden Elemente 4d und 4c hergestellt ist. Es kann vorgesehen sein, eine Vielzahl von derartigen Anschlussstellen 20 zwischen den Elementen 4a, 4b, 4b, 4c, 4d, anzuordnen.

Fig. 9 offenbart eine weitere Ausführungsform des Adapters 10 zum Anschluss von Bauteilen 5, 6, 7, 8, 9 an das Netz 17. Dabei umfasst der Adapter 10 eine Blattfeder 61 und einen Flansch 62 mit einer Adapterplatte 63 und einem Anschlusselement 64. Analog zu Fig. 8 ist ein Teil der Blattfeder 61 zwischen den Schichten 13a und 13 b der Maschinenhausverkleidung 4 angeordnet und gilt somit als Leiterelement, das in direktem elektrischen Kontakt mit dem Netz 17 steht. Analog zu Fig. 2 und 3 dient das Anschlusselement 64 zur Befestigung und/oder elektrischen Verbindung der Bauteile 5, 6, 7, 8, 9 mit dem Flansch 62. Der Flansch 62 kann über Verbindungsmittel 60 mit der Maschinenhausverkleidung 4 verbunden werden, wodurch die elektrisch leitende Adapterplatte 63 die Blattfeder 61 beaufschlägt. Damit ist auch der elektrische Kontakt zwischen dem Flansch 62 und der Blattfeder 61 hergestellt. Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| | | 28 | Blitzableiter |
| 1 | Windturbine | 29 | Erdung |
| 2 | Maschinenhaus | 30 | Erdungsanschluss |
| 3 | Turm | 31 | Hauptlager |
| 4 | Maschinenhausverkleidung | 32 | Rotorerdung |
| 4a-d | Element | 33 | Übertrager |
| 5 | Blitzfänger | 34 | Schaltschrank |
| 6 | Handlauf | 35 | Rotorwelle |
| 7 | Flugleuchte | 36 | Getriebe |
| 8 | Anemometer | 37 | Generator |
| 9 | Ausstieg | 38 | Rotor |
| 10 | Adapter | 39 | Nabe |
| 10a | Anschlusselement | 40 | Rotorblatt |
| 10b | Adapterplatte | 41 | Maschinenträger |
| 10c | Übergangsabschnitt | 50 | Flansch |
| 11 | Kleber | 51 | Flansch |
| 12 | Schicht | 52 | Gewindebolzen |
| 13 | Oberseite X der Glasfasermatte | 53 | Unterlegscheibe |
| 13a-b | Schicht | 54 | Mutter |
| 14 | Gewindemutter | 55 | Verbindungsmittel |
| 15 | Unterlegscheibe | 56 | Träger |
| 16 | Dichtung | 57 | Endabschnitt |
| 17 | Leiterschicht | 58 | Metallplatte |
| 18 | Formabdeckung | 59 | Metallplatte |
| 19 | Ausnehmung | 60 | Verbindungsmitteln |
| 20 | Anschlussstelle | 61 | Blattfeder |
| 21 | Gewindebolzen | 62 | Flansch |
| 22 | Mutter | 63 | Adapterplatte |
| 23 | Unterlegscheibe | 64 | Anschlusselement |
| 24 | Metallplatte | 65 | Befestigungsösen |
| 25 | Metallplatte | | |
| 26a-b | Innenbohrung | | |

## Patentansprüche

1. Maschinenhausverkleidung (4) für ein Maschinenhaus (2) einer Windturbine (1) mit einem Turm (3) und wenigstens einem Rotorblatt (40),
- wobei das Maschinenhaus (2) drehbar auf dem Turm (3) gelagert ist,
- und wobei eine Leiterschicht (17) zur elektromagnetischen Schirmung des Maschinenhauses (2) in die Maschinenhausverkleidung (4) integriert ist,
**dadurch gekennzeichnet, dass**
- das Maschinenhaus (2) eine Maschinenhausverkleidung (4) mit mindestens einer Außenschicht (13a) und einer Innenschicht (13b) aus Verbundwerkstoff umfasst,
- die Leiterschicht (17) zur elektromagnetischen Schirmung des Maschinenhauses (2) zwischen Außenschicht (13a) und Innenschicht (13b) angeordnet ist und somit im Wesentlichen vollständig in die Maschinenhausverkleidung (4) integriert ist, so dass die Leiterschicht (17) vor Korrosion geschützt ist und die Lebensdauer der Leiterschicht (17) erhöht wird,
- die Maschinenhausverkleidung (4) ein mit der Leiterschicht (17) elektrisch verbundenes Leiterelement (10b; 24, 25; 58, 59; 61) aufweist,
- wobei die Leiterschicht (17) über das Leiterelement (10b; 24, 25; 58, 59; 61) direkt oder indirekt mit wenigstens einer an einer Außenseite (13a) oder Innenseite (13b) der Maschinenhausverkleidung (4) anordenbaren leitfähigen Konstruktion (4a, 4b, 4c, 4d, 4e; 5, 6, 7, 8, 9) verbunden ist,
- wobei die Leiterschicht (17) und das Leiterelement (1 0b; 24, 25; 58, 59; 61) derart ausgebildet sind und derart miteinander verbunden sind und mit mindestens einer leitfähigen Konstruktionen (4a, 4b, 4c, 4d, 4e; 5, 6, 7, 8, 9) derart verbindbar sind,
- dass hierüber eine Blitzstromableitung von einer auf der Außenseite der Maschinenhausverkleidung (2) angebrachten Konstruktion (4a, 4b, 4c, 4d, 4e; 5, 6, 7, 8, 9) und/oder ein elektrischer Potentialausgleich zwischen wenigstens zwei an der Außenseite (13a) oder Innenseite (13b) der Maschinenhausverkleidung (4) anordenbaren leitfähigen Konstruktionen (4a, 4b, 4c, 4d, 4e; 5, 6, 7, 8, 9) ermöglicht wird.

2. Maschinenhausverkleidung (4) nach Anspruch 1, **dadurch gekennzeichnet, dass** die Maschinenhausverkleidung (4) aus mehreren Teilelementen (4a, 4b, 4c, 4d, 4e) zusammengesetzt ist, in die jeweils die Leiterschicht (17) integriert ist, wobei die Leiterschichten (17) der einzelnen Elemente (4a, 4b, 4c, 4d, 4e) über die Leiterelemente (24, 25, 58, 59, 61) so miteinander elektrisch leitend verbunden sind, dass ein für einen Potentialausgleich und/oder eine Blitzstromableitung notwendiger Verbindungsquerschnitt vorliegt.

3. Maschinenhausverkleidung (4) nach Anspruch 1 oder 2, **dadurch gekennzeichnet, dass** die Leiterschicht (17) einen zusammenhängenden Bereich mit vergrößerten Leitungsquerschnitten aufweist, sodass eine Leiterbahn von wenigstens einer auf der Außenseite der Maschinenhausverkleidung (4) anbringbaren Konstruktion (5, 6, 7, 8, 9) bis zur Erdung (29)gebildet wird, welche in der Lage ist, die von einem Blitzeinschlag herrührenden Ströme abzuleiten.

4. Maschinenhausverkleidung (4) nach Anspruch 1 oder 2, **dadurch gekennzeichnet, dass** die Leiterschicht (17) und das Leiterelement (10b; 24, 25; 58, 59; 61) dazu ausgebildet sind, eine elektromagnetische Schirmung des Maschinenhauses (2) und einen Potentialausgleich zwischen leitfähigen Konstruktionen (4a, 4b, 4c, 4d, 4e; 5, 6, 7, 8, 9) der Maschinenhausverkleidung (4) zu bewirken, eine Blitzableitung jedoch hauptsächlich oder vollends in einem zur Leiterschicht (17) separat verlaufenden, ebenfalls in die Maschinenhausverkleidung (4) integrierten oder daran angeordneten Leiter (28) erfolgt.

5. Maschinenhausverkleidung (4) nach einem der voran gestellten Ansprüche, **dadurch gekennzeichnet, dass** die indirekte Verbindung der Leiterschichten (17) und der Leiterelemente (24, 25; 58, 59) der leitfähigen Konstruktionen (4a, 4b, 4c, 4d, 4e) über elektrisch leitende Verbindungsmittel (55, 60) hergestellt wird.

6. Maschinenhausverkleidung (4) nach Anspruch 5, **dadurch gekennzeichnet, dass** die Verbindungsmittel (55, 60) als selbstschneidende Schrauben ausgebildet sind.

7. Maschinenhausverkleidung (4) nach Anspruch 5 oder 6, **dadurch gekennzeichnet, dass** das Verbindungsmittel (55) die Außenschicht (13a), die Innenschicht (13b) und das Leiterelement (24, 25) der zu verbindenden Elemente (4a, 4b, 4c, 4d, 4e) durchragt, so dass die Elemente (4a, 4b, 4c, 4d, 4e) über das Verbindungsmittel (55) mechanisch fixiert und mit dem Leiterelement (24, 25) elektrisch leitend verbunden sind.

8. Maschinenhausverkleidung (4) nach Anspruch 5 oder 6, **dadurch gekennzeichnet, dass** die zu verbindenden Elemente (4a, 4b, 4c, 4d, 4e) über einen elektrisch leitenden Träger (56) mit einander verbunden sind und die Verbindungsmittel (60) den Träger (56), das Leiterelement (58, 59) und die Außenschicht (13a) oder die Innenschicht (13b) des jeweiligen Elements (4a, 4b, 4c, 4d, 4e) durchragt, so dass die zu verbindenden Elemente (4a, 4b, 4c, 4d, 4e) über den Träger (56) und den Verbindungsmittel (60) mechanisch fixiert sind und die Leiterelemente (58, 59) elektrisch leitend mit einander verbunden sind.

9. Maschinenhausverkleidung (4) gemäß einem der voran gestellten Ansprüche, **dadurch gekennzeichnet, dass** die Maschinenhausverkleidung (4) einen Adapter (10) umfasst, an welchem das Leiterelement (10b) derart angeordnet ist, so dass der Adapter (10) mit der Leiterschicht (17) einen elektrisch leitenden Verbindungsquerschnitt besitzt, welcher den Vorschriften der IEC 60364-5-54 genügt.

10. Maschinenhausverkleidung (4) gemäß Anspruch 9, **dadurch gekennzeichnet, dass** der Adapter (10) ein Anschlusselement (10a) zum Anschluss von leitfähigen Konstruktionen (5, 6, 7, 8, 9) und eine als das Leiterelement (10b) ausgebildete Adapterplatte (10b) aus jeweils leitfähigem Material umfasst und das Anschlusselement (10a) elektrisch leitend mit der Adapterplatte (10b) und die Adapterplatte (10b) elektrisch leitend mit der Leiterschicht (17) verbunden ist.

11. Maschinenhausverkleidung (4) gemäß Anspruch 10, **dadurch gekennzeichnet, dass** die Adapterplatte (10b) zwischen der Außenschicht (13a) und Innenschicht (13b) angeordnet ist und das Anschlusselement (10a) die Außenschicht (13a) oder die Innenschicht (13b) durchragt.

12. Maschinenhausverkleidung (4) gemäß Anspruch einem der voran gestellten Ansprüche, **dadurch gekennzeichnet, dass** das Leiterelement (61) zumindest teilweise zwischen der Außenschicht (13a) und Innenschicht (13b) angeordnet ist die Außenschicht (13a) oder die Innenschicht (13b) durchragt.

13. Maschinenhausverkleidung (4) gemäß Anspruch 12, **dadurch gekennzeichnet, dass** das Leiterelement (61) als Blattfeder (61) ausgebildet ist.

14. Maschinenhausverkleidung (4) gemäß Anspruch 12 oder 13, **dadurch gekennzeichnet, dass** der Adapter (10) ein Anschlusselement (64) zum Anschluss von leitfähigen Konstruktionen (5, 6, 7, 8, 9) und eine Adapterplatte (63) aus jeweils leitfähigem Material umfasst, das Anschlusselement (64) elektrisch leitend mit der Adapterplatte (63) und die Adapterplatte (63) elektrisch leitend mit dem Leiterelement (61) der Leiterschicht (17) verbunden ist, und die Adapterplatte (63) auf der Außenseite (13a) oder auf der Innenseite (13b) angeordnet ist.

15. Verfahren zur Herstellung einer Maschinenhausverkleidung (4) gemäß einem der voran gestellten Ansprüche, **gekennzeichnet durch** die Schritte,
- Einbringen der ersten Schicht (13a, 13b), der Leiterschicht (17), des Leiterelements (10b; 24, 25; 58, 59; 61), und der zweiten Schicht (13a; 13b) eines Faserwerkstoffs eines Verbundwerkstoffs in eine Herstellungsform,
- Anordnen des Leiterelements (10b; 24, 25; 58, 59; 61) derart, dass es mit der Leiterschicht (17) verbunden ist,
- Anordnen des Leiterelements (10b, 61) derart, dass es einer der Schichten (13a; 13b) durchragt und mit der Leiterschicht (17) verbunden ist,
- Befüllen der Form mit einer flüssigen Werkstoffkomponente.

## Claims

1. Nacelle cover (4) for a nacelle (2) of a wind turbine (1) with a tower (3) and at least one rotor blade (40),
- whereas the nacelle (2) is rotatably mounted on the tower (3),
- and whereas a conductor layer (17) for electromagnetic shielding of the nacelle (2) is integrated in the nacelle cover (4),
**characterized in that**
- the nacelle (2) comprises a nacelle cover (4) with at least one outer layer (13a) and an inner layer (13b) made of composite material,
- the conductor layer (17) for the electromagnetic shielding of the nacelle (2) is arranged between the outer layer (13a) and the inner layer (13b) and essentially completely integrated in the nacelle cover (4), so that the conductor layer (17) is protected from corrosion and the life span of the conductor layer (17) is increased,
- the nacelle cover (4) comprises a conductor element (10b; 24, 25; 58, 59; 61) electrically connected with the conductor layer (17),
- whereas the conductor layer (17) is directly or indirectly connected with at least one conductible construction (4a, 4b, 4c, 4d, 4e; 5, 6, 7, 8, 9) arranged on the outer side (13a) or the inner side (13b) of the nacelle cover (4),
- whereas the conductor layer (17) and the conductor element (10b; 24, 25; 58, 59; 61) are designed in such a way and connected with one another in such a way and combinable with at least one conductible construction (4a, 4b, 4c, 4d, 4e; 5, 6, 7, 8, 9) in such a way,
- that here over a lightning current dissipation from a construction (4a, 4b, 4c, 4d, 4e; 5, 6, 7, 8, 9) arranged on the outer side of the nacelle cover (2) and/or a potential equalization between at least two conductible constructions (4a, 4b, 4c, 4d, 4e; 5, 6, 7, 8, 9) arranged on the outside (13a) or the inside (13b) of the nacelle cover (4) is enabled.

2. Nacelle cover (4) according to claim 1, **characterized in that** the nacelle cover (4) is composed of several subcomponents (4a, 4b, 4c, 4d, 4e), in which the conductor layer (17) is integrated respectively, whereas the conductor layers (17) of the individual elements (4a, 4b, 4c, 4d, 4e) are electrically conductive interconnected via the conductor elements (24, 25, 58, 59, 61) in such a way that a connection cross section required for a potential equalization and/or a lightning current dissipation is present.

3. Nacelle cover (4) according to claim 1 or 2, **characterized in that** the conductor layer (17) comprises a connected area with enhanced cable cross sections, so that a conductor track until grounding (29) is formed of at least one construction (5, 6, 7, 8, 9) arrangeable on the outside of the nacelle cover (4), which is able to derive power resulting from a lightning strike

4. Nacelle cover (4) according to claim 1 or 2, **characterized in that** the conductor layer (17) and the conductor element (10b; 24, 25; 58, 59; 61) are constructed to cause an electromagnetic shielding of the nacelle (2) and a potential equalization between the conductible constructions (4a, 4b, 4c, 4d, 4e; 5, 6, 7, 8, 9) of the nacelle cover, but a lightning derivation mainly or completely results from a conductor (28) running separately to the conductor layer (17), also integrated in the nacelle cover (4) or arranged thereon.

5. Nacelle cover (4) according to one of the preceding claims, **characterized in that** the indirect connection of the conductor layers (17) and the conductor elements (24, 25; 58, 59) of the conductible constructions (4a, 4b, 4c, 4d, 4e) is produced via electrically conducting connecting means (55, 60).

6. Nacelle cover (4) according to claim 5, **characterized in that** the connecting means (55, 60) are designed as self-tapping screws.

7. Nacelle cover (4) according to claim 5 or 6, **characterized in that** the connecting means (55) protrudes the outer layer (13a), the inner layer (13b) and the conductor element (24, 25) of the elements to be connected (4a, 4b, 4c, 4d, 4e), so that the elements (4a, 4b, 4c, 4d, 4e) are mechanically fixed via the connecting means (55) and electrically conductive connected with the conductor element (24, 25).

8. Nacelle cover (4) according to claim 5 or 6, **characterized in that** the elements to be connected (4a, 4b, 4c, 4d, 4e) are interconnected via an electrically conductive carrier (56) and the connecting means (60) projects through the carrier (56), the conductor element (58, 59) and the outer layer (13a) or the inner layer (13b) of the respective element (4a, 4b, 4c, 4d, 4e), so that the elements to be connected are mechanically fixed via the carrier (56) and the connecting means (60) and the conductor elements (58, 59) are electrically conductive interconnected.

9. Nacelle cover (4) according to one of the preceding claims, **characterized in that** the nacelle cover (4) comprises an adapter (10) on which the conductor element (10b) is arranged such that the adapter (10) with the conductor layer (17) comprises an electrically conductive connection cross section fulfilling the requirements of the IEC 60364-5-54.

10. Nacelle cover (4) according to claim 9, **characterized in that** the adapter (10) comprises a connecting element (10a) for the connection of conductible constructions (5, 6, 7, 8, 9) and an adapter plate (10b) designed as the conductor element (10b) out of respectively conductible material and the connecting element (10a) is connected electrically conducting with the adapter plate (10b) and the adapter plate (10b) is connected electrically conducting with the conductive layer (17).

11. Nacelle cover (4) according to claim 10, **characterized in that** the adapter plate (10b) is arranged between the outer layer (13a) and the inner layer (13b) and the connecting element (10a) projects through the outer layer (13a) or the inner layer (13b).

12. Nacelle cover (4) according to one of the preceding claims **characterized in that** the conductor element (61) is at least partially arranged between the outer layer (13a) and inner layer (13b) projecting through the outer layer (13a) or the inner layer (13b).

13. Nacelle cover (4) according to claim 12, **characterized in that** the conductor element (61) is designed as leaf spring (61).

14. Nacelle cover (4) according to claim 12 or 13, **characterized in that** the adapter (10) comprises a connecting element (64) for the connection of conductible constructions (5, 6, 7, 8, 9) and an adapter plate (63) out of respectively conductible material, the connecting element (64) is connected electrically conducting with the adapter plate (63) and the adapter plate (63) is connected electrically conducting with the conductor element (61) of the conductor layer (17), and the adapter plate (63) is arranged on the outside (13a) or on the inside (13b).

15. Method for the manufacturing of a nacelle cover (4) according to one of the preceding claims, **characterized by** the steps,
- introducing the first layer (13a, 13b), the conductor layer (17), the conductor element (10b; 24, 25; 58, 59; 61), and the second layer (13a; 13b) of a fiber material of a composite material in a production mold,
- arranging the conductor element (10b; 24, 25; 58, 59; 61) such that it is connected with the conductor layer (17),
- arranging the conductor element (10b, 61) such that it projects through one of the layers (13a; 13b) and that it is connected with the conductor layer (17),
- filling the mold with a fluid material component.

## Revendications

1. Le carénage de nacelle (4) d'une nacelle (2) d'éolienne (1) avec une tour (3) et au moins une pale de rotor (40),
- où la nacelle (2) est montée de manière à pivoter sur la tour (3),
- et où une couche de conducteur (17) assurant le blindage électromagnétique de la nacelle (2) est intégrée dans le carénage de nacelle (4),
**caractérisée en ce que**
- la nacelle (2) comprend un carénage de nacelle (4) avec au moins une couche extérieure (13a) et une couche intérieure (13b) faites d'un matériau composite,
- la couche de conducteur (17) assurant le blindage électromagnétique de la nacelle (2) est placé entre la couche extérieure (13a) et la couche intérieure (13b) et est par essence complètement intégrée dans le carénage de nacelle (4), de telle manière que la couche de conducteur (17) est protégée de la corrosion améliorant ainsi la durée de vie de la couche conductrice (17),
- la nacelle de nacelle (4) comprend un élément conducteur (10b; 24, 25; 58, 59; 61) électriquement connecté avec la couche conductrice (17),
- où la couche de conducteur (17) est directement ou indirectement connectée avec au moins une construction conductible (4a, 4b, 4c, 4d, 4e; 5, 6, 7, 8, 9) arrangée sur la couche extérieure (13a) ou bien à l'intérieure de la nacelle (13b) du carénage de nacelle (4),
- où la couche de conducteur (17) et l'élément conducteur (10b; 24, 25; 58, 59; 61) sont conçu d'une telle manière, connectée ensemble d'une telle manière, et combinable avec au moins une construction de conduction électrique. (4a, 4b, 4c, 4d, 4e; 5, 6, 7, 8, 9) d'une telle manière,
- qu'ils permettent à cet endroit la dissipation de l'énergie électrique de la foudre à partir de la construction conductible (4a, 4b, 4c, 4d, 4e; 5, 6, 7, 8, 9) placée à l'extérieur du carénage de la nacelle, (2) et/ou qu'elle permette la neutralisation de la différence de potentiel entre, au moins, 2 constructions conductible (4a, 4b, 4c, 4d, 4e; 5, 6, 7, 8, 9) placée à l'extérieur (13a) ou bien à l'intérieur (13b) du carénage de nacelle (4).

2. Le carénage de nacelle (4) selon la revendication 1, **caractérisé en ce que** le carénage de nacelle (4) est composé de plusieurs sous-composants (4a, 4b, 4c, 4d, 4e), dans chacun desquels une couche de conducteur (17) est intégrée respectivement, ou les couches conductrices (17) des composants individuels (4a, 4b, 4c, 4d, 4e) sont interconnectés électriquement et de manière conductible grâce à des éléments conducteurs (24, 25, 58, 59, 61) de telle façon qu'il y ai une coupe transversale à la jonction suffisante pour la neutralisation de potentiel et/ou la dissipation de la foudre.

3. Le carénage de nacelle (4) selon la revendication 1 ou 2, **caractérisé en ce que** la couche de conducteur (17) comprenne une surface connectée avec des câbles ayant des coupes transversales améliorées, permettant qu'un chemin conducteur se forme jusqu'à la mise à la masse (29) à partir d'au moins une construction (5, 6, 7, 8, 9) arrangeable à l'extérieur du carénage de nacelle (4), qui soient capable de dériver la puissance résultante d'un impact d'éclair.

4. Le carénage de nacelle (4) selon la revendication 1 ou 2, **caractérisé en ce que** la couche de conducteur (17) et l'élément conducteur (10b; 24, 25; 58, 59; 61) soient conçus pour former un blindage électromagnétique de la nacelle (2) et la neutralisation de potentiel entre les constructions conductibles (4a, 4b, 4c, 4d, 4e, 5, 6, 7, 8, 9) du carénage de nacelle (4), cependant la dérivation de la foudre résulte principalement ou complètement d'un conducteur (28) courant séparément jusqu'à la couche conductrice (17), également intégrée dans le carénage de nacelle (4) ou arrangée sur celle-ci.

5. Le carénage de nacelle (4) selon une des revendications précédentes, **caractérisé en ce que** la connexion indirecte des couches conductrices (17) et des éléments conducteurs (24, 25; 58, 59) des éléments conducteurs (4a, 4b, 4c, 4d, 4e) soient réalisés par des moyens de connexion électriquement conducteurs (55, 60).

6. Le carénage de nacelle (4), selon la revendication 5, **caractérisé en ce que** les moyens de liaison (55, 60) sont conçus sous la forme de vis auto-taraudeuses.

7. Carénage de nacelle (4) selon la revendication 5 ou 6, **caractérisé en ce que** les moyens de connexion (55) font saillie hors de la couche extérieure (13a), la couche intérieure (13b) et de l'élément conducteur (24, 25) des éléments à connecter (4a, 4b, 4c, 4d, 4e), de sorte que les éléments conducteurs (4a, 4b, 4c, 4d, 4e) soient fixés mécaniquement par l'intermédiaire des moyens de connexion (55) et connectés électriquement et de manière conductible à l'élément conducteur (24, 25).

8. Carénage de nacelle (4) selon la revendication 5 ou 6, **caractérisé en ce que** les éléments à connecter (4a, 4b, 4c, 4d, 4e) sont interconnectés par l'intermédiaire d'un support électriquement conducteur (56) et les moyens de connexion (60) font saille à travers le support (56), l'élément conducteur (58, 59) et la couche extérieure (13a) ou la couche interne (13b) des éléments respectifs (4a, 4b, 4c, 4d, 4e), de sorte que les éléments à connecter sont fixés mécaniquement via le support (56) et les moyens de connexion (60), et les éléments conducteurs (58, 59) sont interconnectés électriquement et de manière conductible.

9. Carénage de nacelle (4) selon l'une quelconque des revendications précédentes, **caractérisé en ce que** le carénage de nacelle (4) comprenne un adaptateur (10) sur lequel l'élément conducteur (10b) est agencé de telle sorte que l'adaptateur (10) forme avec la couche de conducteur (17) une section transversale de raccordement électrique et conductible répondant aux exigences de la CEI 60364-5-54.

10. Carénage de nacelle (4) selon la revendication 9, **caractérisé en ce que** l'adaptateur (10) comprenne un élément de liaison (10a) pour la connexion de constructions conductible (5, 6, 7, 8, 9) et d'une plaque d'adaptation (10b), tous conçus de matériaux conducteurs, et l'élément de liaison (10a) est connecté électriquement transmettant le courant à la plaque d'adaptation (10b), et la plaque d'adaptation (10b) est connectée électriquement transmettant le courant à la couche conductible (17).

11. Carénage de nacelle (4) selon la revendication 10, **caractérisé en ce que** la plaque d'adaptation (10b) soit agencée entre la couche extérieure (13a) et la couche intérieure (13b) et l'élément de liaison (10a) fait saille hors de la couche extérieure (13b) 13a) ou de la couche interne (13b).

12. Carénage de nacelle (4) selon l'une quelconque des revendications précédentes, **caractérisé en ce que** l'élément conducteur (61) soit disposé au moins partiellement entre la couche extérieure (13a) et la couche intérieure (13b) faisant saillie hors de la couche extérieure (13a) ou de la couche interne (13b).

13. Carénage de nacelle (4) selon la revendication 12, **caractérisé en ce que** l'élément conducteur (61) soit conçu comme un ressort à lame (61).

14. Carénage de nacelle (4) selon la revendication 12 ou 13, **caractérisé en ce que** l'adaptateur (10) comprenne un élément de liaison (64) pour la connexion de constructions conductible (5, 6, 7, 8, 9) et d'une plaque d'adaptation (63), tous conçue de matériaux conducteurs, l'élément de conduction (64) est connecté électriquement transmettant le courant à la plaque d'adaptation (63), et la plaque d'adaptation (63) est connectée électriquement transmettant le courant à l'élément conducteur (61) de la couche conductrice (17), et la plaque d'adaptation (63) est arrangée à l'extérieur (13a) ou à l'intérieur (13b).

15. Procédé de fabrication d'un carénage de nacelle (4) selon l'une quelconque des revendications précédentes, **caractérisé par** les étapes,
- Introduire la première couche (13a, 13b), la couche conductrice (17), de l'élément conducteur (10b; 24, 25; 58; 59; 61), et la seconde couche (13a; 13b) d'un matériau fibreux d'un matériau composite dans un moule de production,
- disposer l'élément conducteur (10b; 24, 25; 58, 59; 61) de manière à ce qu'il soit relié à la couche conductrice (17),
- disposer l'élément conducteur (10b, 61) de telle sorte qu'il traverse l'une des couches (13a; 13b) et qu'il soit relié à la couche conductrice (17),
- remplir le moule avec un composant de matériau fluide.
